# EUROPÄISCHE PATENTSCHRIFT

(11) **EP 4 111 573 B1**
(45) Veröffentlichungstag und Bekanntmachung des Hinweises auf die Patenterteilung: **10.09.2025**
(21) Anmeldenummer: 20838109.5
(22) Anmeldetag: 28.12.2020
(51) Int. Cl.: H02K 1/02, H02K 1/27, H01F 1/00, H02K 11/25

(54) **ELEKTRISCHE MACHINE MIT PERMANENTMAGNETEN UND DEREN STEUERUNG**
ELECTRICAL MACHINE WITH PERMANENT MGNETS AND CONTROL THEREOF
MACHINE ELECTRIQUE A AIMANTS PERMANENTS ET SON CONTROLE

(30) Priorität: 24.02.2020 DE 102020202304
(43) Veröffentlichungstag der Anmeldung: 04.01.2023
(73) Patentinhaber: Robert Bosch GmbH, 70442 Stuttgart (DE)
(72) Erfinder: WUEST, Holger, 71111 Waldenbuch (DE)
(86) Internationale Anmeldenummer: PCT/EP2020/087922
(87) Internationale Veröffentlichungsnummer: WO 2021/170284

(56) Entgegenhaltungen:
- JP-A- 2002 329 603
- KR-A- 20180 010 870
- US-A1- 2010 289 366

## Beschreibung

### Stand der Technik

Die DE 10 2013 222 208 A1 bezieht sich auf ein Verfahren zum Abschätzen der Temperatur von Magneten an einem Rotationselement einer rotierenden elektrischen Maschine. Hierbei ist vorgesehen, dass wenn wenigstens das Rotationselement von der rotierenden elektrischen Maschine durch ein Kühlmittel gekühlt wird, eine Magnettemperatur-Schätzeinrichtung die Magnettemperatur auf Basis von der Temperatur des Kühlmittels und einem Verlust des Rotationselements einschließlich der Magnete abschätzt.

US 2010/0289366 A1 offenbart eine gattungsgemässe Rotorblechpaketanordnung. Kern und Vorteile der Erfindung

Rotierende elektrische Maschinen, insbesondere permanenterregte rotierende elektrische Maschinen, werden in unterschiedlichen Bauformen und Größen bzw. Leistungsklassen (z.B. Fensterheber, Mikromotoren bis hin zu Traktionsantrieben im Automobil und Generatoren in Windkraftanlagen, etc.) eingesetzt. Sie zeichnen sich durch eine hohe Leistungsdichte (pro Masse oder Volumen) aus und sind damit vor allem für nicht-stationäre Anwendungen von Bedeutung.

Die Permanenterregung wird in diesen Maschinen mit Dauermagneten (auch Hartmagnete oder Permanentmagnete genannt) erzeugt. Als Material für die Permanentmagnete werden in Maschinen mit hohen Leistungsdichten üblicherweise Neodym-Eisen-Bor-Legierungen oder Samarium-Cobalt-Legierungen eingesetzt.

Die Permanentmagnete werden am Ende des Herstellungsprozesses oder bereits im Rotorblechpaket bzw. im Motor durch ein externes Magnetfeld aufmagnetisiert. Durch ihre spezifischen magnetischen Eigenschaften (Hysterese-Verhalten und hohe Koerzitivfeldstärke bzw. Entmagnetisierungsfestigkeit) behalten diese Materialien ihre Magnetisierung nach Entfernen des externen Magnetfeldes und weisen ein sogenanntes Streufeld auf, d. h. ein Magnetfeld außerhalb des Permanentmagneten, welches vom Permanentmagnet ausgeht. Dieses Streufeld wird für die Anwendung in permanenterregten rotierenden elektrischen Maschinen ausgenutzt. Permanentmagnetische Materialien besitzen eine charakteristische Temperatur T_{c} (Curietemperatur). Bei Überschreiten dieser Temperatur unterliegt das Material einem Phasenübergang, wobei das Material vom ferromagnetischen in den paramagnetischen Zustand wechselt und somit seine für die Anwendung relevante gerichtete Magnetisierung verliert. Bei anschließender Unterschreitung von der Curietemperatur T_{c} wird das Material wieder ferromagnetisch. Allerdings besitzt es nach Unterschreitung der Curietemperatur T_{c} seine anfänglich durch ein externes Magnetfeld eingeprägte Magnetisierung nicht mehr und hat damit seine für die Anwendung in einer rotierenden elektrischen Maschine relevanten Eigenschaften irreversibel verloren. Daher wird bei der Auslegung und im Betrieb darauf geachtet, dass die Permanentmagnete keinen Temperaturen ausgesetzt sind, welche die permanentmagnetischen Eigenschaften irreversibel verringern bzw. beeinflussen. Die Temperatur, bei der solche irreversiblen Änderungen (Teilentmagnetisierungen) geschehen, kann auf Grund statistischer Prozesse zum Teil unter der nominellen Curietemperatur T_{c} des Permanentmagneten liegen.

Die Erfindung betrifft eine Rotorblechpaketanordnung, eine Rotoranordnung, eine rotierende elektrische Maschine und ein Verfahren zur Steuerung einer rotierenden elektrischen Maschine.

Ein Vorteil der Erfindung mit den Merkmalen der unabhängigen Patentansprüche ist, dass eine Temperaturmessung kabellos und platzsparend direkt am Permanentmagneten durchgeführt ermöglicht wird, wobei die Temperaturmesseinrichtung mit wenig Mehraufwand implementierbar ist. Insbesondere sind keine komplexen Schnitte im Rotorblechpaket (Lamellenpaket) und auch keine großen Lücken um die Permanentmagnete herum erforderlich, wodurch das Magnetfeld des Permanentmagneten nicht gestört wird und somit die Leistung der rotierenden elektrischen Maschine vorteilhafterweise erhalten bleibt. Ein weiterer Vorteil ist, dass mittels der vorliegenden Erfindung das Überschreiten und/oder das Unterschreiten einer Schwelltemperatur detektierbar ist. Insbesondere ist es so möglich über eine Steuereinheit Maßnahmen beispielsweise zur Temperatursenkung einzuleiten, um die Leistungsfähigkeit der rotierenden elektrischen Maschine zu erhalten.

Dies wird erreicht mit einer Rotorblechpaketanordnung gemäß Anspruch 1.

Die Rotorblechanordnung umfasst vorzugsweise mindestens zwei Permanentmagnete, wobei mindestens einer der beiden Permanentmagnete eine funktionale Schicht aufweist.

Als Blechmaterial für das Rotorblechpaket kommt typischerweise ein sehr gut flussleitendes Ferrosilicium (Fe-Si)-Material als Elektroblech zum Einsatz.

Die Permanentmagnete können in Taschen, die im Schnitt des Rotorblechpaketes vorgehalten sind, oder auf dem Rotorblechpaket angeordnet sein. Insbesondere ist diese Variante für Synchronmaschinen mit hochdrehenden Rotoren vorteilhaft, da die vergrabenen Magnete für die Feldbildung eingesetzt werden können, um damit die extremen Belastungen durch die hohen Fliehkräfte besser zu beherrschen.

Bei Überschreitung der Curietemperatur eines Materials zeigt dieses einen reversiblen Phasenübergang von seinem ferromagnetischen in seinen paramagnetischen Zustand, wobei oberhalb der Curietemperatur die spontane oder gerichtete Magnetisierung von Kristallbereichen verschwindet. Bei Unterschreitung der Curietemperatur erlangt das Material seine magnetischen Eigenschaften wieder zurück, d. h. es zeigt sich eine spontane Magnetisierung der Weissschen Bezirke, sofern kein äußeres Magnetfeld auf das Material einwirkt. Eine anfänglich durch ein externes Magnetfeld eingeprägte Magnetisierung erlangt der Permanentmagnet bei Unterschreitung der Curietemperatur jedoch nicht mehr zurück. Damit hat er seine für die Anwendung in einer rotierenden elektrischen Maschine relevanten magnetischen Eigenschaften nach Unterschreitung der Curietemperatur irreversibel verloren. Permanentmagnete sind folglich nur deutlich unterhalb ihrer Curietemperatur zuverlässig als Magnetwerkstoffe einsetzbar.

Auf Grund statistischer Prozesse können zum Teil bereits unterhalb der Curietemperatur des Permanentmagneten Teilentmagnetisierungen auftreten, die die Leistungsfähigkeit einer rotierenden elektrischen Maschine einschränken. Als Schwelltemperatur des Permanentmagneten (auch als Temperaturschwelle, Schwellentemperatur oder Grenztemperatur bezeichnet) wird hierbei eine Temperatur kleiner als die Curietemperatur des Permanentmagneten bezeichnet, bei der noch keine irreversiblen Änderungen der magnetischen Eigenschaften des Permanentmagneten auftreten. Beispielsweise kann die Schwelltemperatur mindestens 100° oder mindestens 150° unter der Curietemperatur des Permanentmagneten liegen. Insbesondere sollte als Schwelltemperatur eine Temperatur gewählt werden, die einen ausreichend großen Abstand zur Curietemperatur des Permanentmagneten aufweist, sodass der Permanentmagnet genügend Zeit hat, um auf eine Anpassung der Betriebsparameter der rotierenden elektrischen Maschine, umfassend den Permanentmagneten, zur Vermeidung einer weiteren Temperaturerhöhung des Permanentmagneten, zu reagieren. Dadurch können irreversible Änderungen der magnetischen Eigenschaften des Permanentmagneten vermieden werden. Unter den magnetischen Eigenschaften der funktionalen Schicht können insbesondere die Magnetisierung, Polarisation und/oder magnetische Permeabilität der funktionalen Schicht verstanden werden.

Die funktionale Schicht ändert ihre magnetischen Eigenschaften, insbesondere Magnetisierung, Polarisation und magnetische Permeabilität, bei Überschreitung und/oder Unterschreitung ihrer materialcharakteristischen Temperatur Tc (Curietemperatur) sprunghaft und signifikant. Dabei liegt die Curietemperatur der funktionalen Schicht vorzugsweise unterhalb der Curietemperatur des Permanentmagneten. Insbesondere kann die Curietemperatur der funktionalen Schicht der Schwelltemperatur entsprechen. Die Änderung der magnetischen Eigenschaften der funktionalen Schicht durch den Phasenübergang von ferromagnetisch zu paramagnetisch bzw. im Fall einer Unterschreitung der Curietemperatur der funktionalen Schicht von paramagnetisch zu ferromagnetisch, wirken sich im Magnetkreis, umfassend den Permanentmagneten, die funktionale Schicht und das Elektroblech, aus und lassen sich über die Maschinendaten im Betrieb detektieren und ggf. Maßnahmen über die Motorsteuerung einleiten.

Ein Vorteil der funktionalen Schicht zur Temperaturüberwachung des Permanentmagneten ist die Erlangung einer direkten Information der Oberflächentemperatur des Permanentmagneten bzw. die Information über die Überschreitung und/oder Unterschreitung einer bestimmten Temperaturschwelle. Durch diese Information kann das System vor einer Überhitzung der Permanentmagnete bewahrt werden. Durch die genaue und ortsnahe Detektion des Überschreitens der Temperaturschwelle kann eine Maschine deutlich näher an diese Temperaturschwelle heran ausgelegt und betrieben werden. Dabei müssen keine Sicherheitspuffer eingehalten werden. Der Phasenübergang des Materials der funktionalen Schicht ist vollständig reversibel und beliebig wiederholbar. Da zur Temperaturüberwachung des Permanentmagneten lediglich eine funktionale Erweiterung des Permanentmagneten und eine Anpassung der Maschinen-Software zur Detektion des Effekts vorgenommen wurde, ist keine Anpassung weiterer Bauteile (z.B. des Lamellenpakets), der Elektronik oder neue Komponenten nötig. Dadurch können vorteilhafterweise bestehende Designs, Geometrien und Prozesse beibehalten werden.

Die Schichtdicke der funktionalen Schicht sollte nicht zu dick gewählt werden, sodass im Normalbetrieb, d. h. bei Temperaturen unterhalb der Curietemperatur der funktionalen Schicht (T < T_{c} der funktionalen Schicht) diese das Magnetfeld des Permanentmagneten, auf den sie aufgebracht ist, nicht zu sehr abschirmt und dadurch die Funktion der Maschine negativ beeinflusst. Um dies zu gewährleisten, beträgt eine Schichtdicke der funktionalen Schicht vorzugsweise kleiner oder gleich 200 µm, vorzugsweise kleiner oder gleich 50 Mikrometer (µm), insbesondere kleiner oder gleich 20 µm.

Die funktionale Schicht besteht aus einem Material, welches sich bei den gewünschten Betriebstemperaturen der rotierenden elektrischen Maschine, welche die Rotorblechpaketanordnung umfasst, im ferromagnetischen Zustand befindet und eine Curietemperatur T_{c} aufweist, die der gewünschten Temperaturschwelle entspricht.

Für typische Motoranwendungen mit Neodym-Eisen-Bor-Magneten als Permanentmagneten, deren Curietemperatur zwischen 310° C und 340°C liegt, sind die maximalen Betriebstemperaturen auf unter 200°C, meist zwischen 100°C und 160°C (je nach Magnetklasse) beschränkt.

Für Samarium-Cobalt-Magnete, deren Curietemperatur zwischen 750°C und 825°C liegt, können typische Betriebstemperaturen von bis zu 350°C (Spezielle Sm₂Co₁₇-Legierungen bis zu 550 °C) erreicht werden. Im Falle von Neodym-Eisen-Bor-Magneten als Permanentmagneten eignet sich dann insbesondere ein Material als funktionale Schicht, welches eine Curietemperatur unterhalb von 250°C, insbesondere im Bereich von einschließlich 100°C bis einschließlich 200°C (je nach Magnetklasse), hat und bei welchem sich, beispielsweise durch die Legierungszusammensetzung, die Curietemperatur der funktionalen Schicht bei der Herstellung genau festlegen lässt. Bei Samarium-Cobalt-Magneten eignet sich dann insbesondere ein Material als funktionale Schicht, welches eine Curietemperatur im Bereich von kleiner gleich 500°C, insbesondere im Bereich von 250°C bis 350°C (wobei 250°C und 350°C eingeschlossen sind) hat und bei welchem sich, beispielsweise durch die Legierungszusammensetzung, die Curietemperatur der funktionalen Schicht bei der Herstellung genau festlegen lässt. Damit das Material, aus dem die funktionale Schicht ausgebildet ist, den magnetischen Fluss des Permanentmagneten möglichst gut weiterleitet (d.h. den magnetischen Widerstand im Magnetkreis reduziert), ist es weiterhin vorteilhaft für das Material der funktionalen Schicht, eine hohe Magnetisierung M, Polarisation J und eine hohe Permeabilität µ aufzuweisen, insbesondere eine Sättigungspolarisation Jₛ größer als 0,5 Tesla (T), vorzugsweise größer als 1 T. Die relative Permeabilität µᵣ sollte insbesondere größer als 500, vorzugsweise größer als 1000 sein.

Legierungen, welche als funktionale Schicht zur Temperaturüberwachung des Permanentmagneten eingesetzt werden können und welche Curietemperaturen, die sich als Schwelltemperatur eignen aufweisen, sind beispielsweise folgende:
- Eisenaluminid-Legierungen (Fe-Al-Legierungen) wie zum Beispiel Fe₃Al mit einer Curietemperatur von Tc~300°C, je nach Zusammensetzung lassen sich auch Eisen-Aluminium-Legierungen mit einer Curietemperatur Tc im Bereich von 100-200°C (inklusive der Randwerte) realisieren.
- Fe-Al-X-Legierungen, wie beispielsweise (FeₓV₁₋ₓ)₃Al, deren Curietemperatur über den Vanadium-Gehalt (V-Gehalt) einstellbar ist, wobei Curietemperaturen von -200°C und 500°C oder einen Wert zwischen -200°C und 500°C über die Wahl des Vanadium-Gehalts realisiert werden können (Quelle: Gautam Ghosh and MSIT^{®®}; Effenberg, G. (Ed.); SpringerMaterials; 10.19028.2.9 (Springer-Verlag GmbH, Heidelberg, 2004)
- Nickel (Ni), welches eine Curietemperatur von 354°C aufweist und sich insbesondere als funktionale Schicht zur Temperaturüberwachung eines Permanentmagneten aus einer Samarium-Cobalt-Legierung eignet
- Eisen-Nickel-Verbindungen (Fe-Ni-Verbindungen), ggf. mit Zusätzen an Molybdän (Mo) und/oder Kupfer (Cu) und/oder weiteren chemischen Elementen, wodurch Curietemperaturen der funktionalen Schicht von 100°C, 500°C oder einen Wert zwischen 100°C und 500°C, je nach Zusammensetzung der Eisen-Nickelverbindung und den optionalen Zusätzen realisierbar sind.
- Ferrite, welche Curietemperaturen von einschließlich 100°C bis einschließlich 450°C aufweisen.

Weitere Beispiele von Materialien, welche als funktionale Schicht zur Temperaturüberwachung des Permanentmagneten eingesetzt werden können sind:
- MnFeP₁₋ₓ Siₓ mit Curietemperaturen von 70°C, 110°C oder einem Wert zwischen 70°C und 110°C (abhängig von der Zusammensetzung, d. h. der Wahl des Werts x)
- Amorphe Verbindungen wie beispielsweise (Fe,Co)₈₃(Si,B)₁₇ mit einer Curietemperatur von etwa 430°C
- Ti(FeCo)_{2.3}: mit einer Curietemperatur von -70°C bis 400°C (je nach Cobalt-Anteil)
- Ce₂(FeCo)₁₇ mit einer Curietemperatur von etwa 0°C bis 800°C (je nach Cobalt-Anteil)

Die vorangegangene Aufzählung ist nur beispielhaft und nicht als abschließend zu verstehen. Weitere Materialien, deren Curietemperatur als Schwelltemperatur des Permanentmagneten geeignet ist, können als funktionale Schicht zur Temperaturüberwachung des Permanentmagneten eingesetzt werden.

Die funktionale Schicht kann neben der eigentlichen funktionalen kristallographischen Phase (mit einer Curietemperatur, welche der Schwelltemperatur entspricht) auch noch zu einem Teil (vorzugsweise <50 Vol%) andere kristallographische Phasen aufweisen, insbesondere, wenn sich diese durch den Herstellungsprozess nicht vermeiden lassen und für die Funktion keine Einschränkung bedeuten.

Die funktionale Schicht kann mit üblichen Methoden, wie z.B. chemische Beschichtungsverfahren, Bedampfungsverfahren, Sputter-Verfahren, Vakuum-Abscheideverfahren, Sprüh- oder Spritzverfahren, Tauchverfahren, Aufbringen mittels einer Dispersion, etc. auf den Permanentmagnet aufgebracht werden.

In einer Ausführungsform umfasst der Permanentmagnet eine Schutzschicht, wobei die Schutzschicht zwischen Permanentmagnet und funktionaler Schicht oder auf einer vom Permanentmagnet abgewandten Seite der funktionalen Schicht aufgebracht sein. Insbesondere kann die Schutzschicht eine Oxidationsschutzschicht umfassen. Die Oxidationsschutzschicht kann beispielsweise Kupfer-Nickel (Cu-Ni) umfassen, als Einfach- oder Multilayer, mit einer Schichtdicke kleiner 10 µm). Es kann sowohl erst die Oxidationsschutzschicht, als auch zuerst die funktionale Schicht aufgebracht werden, je nachdem was aus prozesstechnischer Sicht vorteilhafter ist. Alternativ oder ergänzend kann die Schutzschicht eine Passivierungsschicht umfassen, wobei die Passivierungsschicht beispielsweise eine Zink-Schicht umfassen kann, welche eine Schichtdicke von wenigen Mikrometer, insbesondere 5 µm bis 40 µm, vorzugsweise 8 µm bis 12 µm aufweist.

Alternativ oder ergänzend kann die funktionale Schicht als Schutzschicht wirken, insbesondere kann die funktionale Schicht als Oxidationsschutz fungieren. Ein Vorteil ist, dass somit der magnetische Widerstand im Magnetkreis geringgehalten wird und der magnetische Fluss des Permanentmagneten zuverlässig weitergeleitet wird.

In einer Ausführungsform umfasst das Rotorblechpaket eine erste funktionale Schicht und eine zweite funktionale Schicht, wobei die erste funktionale Schicht auf einer ersten Oberfläche des Permanentmagneten angeordnet ist und wobei die zweite funktionale Schicht auf einer von der ersten Oberfläche abgewandten zweiten Oberfläche des Permanentmagneten angeordnet ist. Die erste und die zweite funktionale Schicht sind folglich auf zwei voneinander abgewandten Oberflächen des Permanentmagneten aufgebracht. Insbesondere zeigen die Oberflächennormalen der funktionalen Schichten vorteilhafterweise in Richtung der magnetischen Vorzugsrichtung der typischerweise verwendeten anisotropen Permanentmagnete. Ein Vorteil ist, dass somit das aus dem Permanentmagneten austretende nutzbare magnetische Feld nicht verringert wird. Des Weiteren ist eine Beschichtung nur zweier einander gegenüberliegender Oberflächen aus prozesstechnischen Gründen wesentlich einfacher und kostengünstiger umzusetzen.

Gemäß einer Ausführungsform kann die funktionale Schicht als Partikelschicht ausgebildet sein, welche funktionale Partikel und ein Bindematerial umfasst, wobei die funktionalen Partikel von dem Bindematerial zumindest teilweise umhüllt sind. Das Bindematerial, beispielsweise ein Kunststoff, kann die funktionalen Partikel umhüllen und zusammenhalten. Die Partikel bestehen beispielsweise aus einem oder mehreren der oben genannten Materialien mit dem gewünschten T_{c}. Vorteilhaft an dieser Ausführungsform ist, dass Partikel in einer Suspension oder Klebemasse in einen Spalt zwischen Permanentmagnet und Elektroblech eingespritzt werden können. Bei manchen Maschinenausführungen werden die Permanentmagnete im Rotorblechpaket durch Einspritzen von Epoxid in diesen Spalt zusätzlich fixiert, um den hohen Fliehkräften zu widerstehen. Das Beimengen von funktionalen Partikeln kann hierbei vorteilhafterweise in den Prozess integriert werden.

Gemäß einer Ausführungsform kann der Permanentmagnet der Rotorblechpaketanordnung aus einer Neodym-Eisen-Bor-Legierung ausgebildet sein und die Curietemperatur der funktionalen Schicht einen Wert kleiner gleich 250° Celsius, insbesondere einen Wert zwischen 100° Celsius und 200° Celsius, aufweisen.

Gemäß einer Ausführungsform kann der Permanentmagnet der Rotorblechpaketanordnung aus einer Samarium-Cobalt-Legierung ausgebildet sein und die Curietemperatur der funktionalen Schicht einen Wert von 350° Celsius oder 500° Celsius oder einen Wert zwischen 350° Celsius und 500° Celsius aufweisen.

Erfindungsgemäss umfasst die funktionale Schicht eine erste Teilschicht, die eine erste Curietemperatur aufweist und eine zweite Teilschicht (10512), die eine zweite Curietemperatur aufweist, und wobei die erste Curietemperatur und die zweite Curietemperatur voneinander abweichen. Ein Vorteil ist, dass eine solche aus mindestens zwei Teilschichten bestehende funktionale Schicht ein Multilayer-System bildet, welches das Implementieren mehrerer auch unterschiedlicher Schwelltemperaturen (=Curietemperaturen der funktionalen Teilschichten) ermöglicht, wenn eine Mehrstufigkeit des Signals gewünscht ist. Somit kann vorteilhafterweise eine genaue Temperaturüberwachung erfolgen, insbesondere kann festgestellt werden in welchem Temperaturintervall die Temperatur des Permanentmagneten liegt und ggf. können Gegenmaßnahmen über die Motorsteuerung eingeleitet werden.

Die Vorteile einer Rotoranordnung, umfassend eine Rotorblechpaketanordnung gemäß einer der vorgenannten Ausführungsformen, ergeben sich aus den Vorteilen der Rotorblechpaketanordnung.

Eine wie vorstehend ausgebildete rotierende elektrische Maschine umfasst bevorzugt eine Steuereinheit zur Steuerung der rotierenden elektrischen Maschine, weiterhin umfassend
- eine Empfangseinheit, welche dazu eingerichtet ist ein Eingangssignal zu empfangen, wobei das Eingangssignal eine magnetische Größe repräsentiert, mittels derer die Überschreitung und Unterschreitung der Schwelltemperatur des Permanentmagneten erfassbar ist,
- eine Vergleichseinheit, welche das Eingangssignal mit einer Referenzkurve vergleicht und in Abhängigkeit der erfassten Überschreitung und Unterschreitung der Schwelltemperatur des Permanentmagneten ein Steuersignal zur Einstellung mindestens eines Betriebsparameters der rotierenden elektrischen Maschine bereitstellt und
- eine Ausgabeeinheit zur Ausgabe des Steuersignals zur Einstellung mindestens eines Betriebsparameters der rotierenden elektrischen Maschine in Abhängigkeit der erfassten Überschreitung und Unterschreitung der Schwelltemperatur des Permanentmagneten.

Die Empfangseinheit, die Vergleichseinheit und/oder die Ausgabeeinheit können als Teil eines Motorsteuergeräts, welches die Steuerung, Regelung und Überwachung von Motorfunktionen übernimmt, ausgebildet sein. Das Motorsteuergerät kann beispielsweise Mikrocontroller zur Ausführung von Rechenoperationen (wie beispielsweise ein Signalvergleich) aufweisen, wobei der Mikrocontroller Zugriff auf einen internen und/oder externen Speicher (RAM, ROM und Flash-Speicher) hat, in dem beispielsweise die Referenzkurve bzw. Referenzdaten abgespeichert sind. Des Weiteren kann die Motorsteuerung auch ASICs und/oder FPGAs umfassen. Insbesondere können die Empfangseinheit und/oder die Ausgabeeinheit in das Motorsteuergerät integrierte Schnittstellen für analoge und digitale Eingangssignale von Sensoren und Ausgangssignale für Aktoren umfassen. Beispielsweise können Anpassungen des Betriebszustandes der elektrisch rotierenden Maschine (z. B. Energiesparmodus) über das Motorsteuergerät erfolgen.

Ein Vorteil der Steuereinheit ist, dass auf einfache Weise eine Temperaturüberwachung der rotierenden elektrischen Maschine erfolgen kann, da lediglich eine magnetische Größe überwacht wird, anhand derer eine Überschreitung und/oder Unterschreitung der Schwelltemperatur des Permanentmagneten in der Rotoranordnung der rotierenden elektrischen Maschine erfassbar ist. Im Fall, dass eine Überschreitung der Schwelltemperatur anhand der magnetischen Größe (beispielsweise magnetischer Widerstand des Magnetkreises, magnetischer Fluss, Strom-/Spannungs-Verlauf, elektrische Leistung, etc.) beim Vergleich mit einer Referenzkurve festgestellt wird, können direkt Maßnahmen über die Motorsteuerung eingeleitet werden, um beispielsweise die Leistung der Maschine zu drosseln und eine Temperatursenkung zu bewirken. Damit ermöglicht die Steuereinheit ein Überhitzen der Permanentmagnete zu vermeiden (siehe oben) und somit einen zuverlässigen Betrieb der rotierenden elektrischen Maschine. Wird anschließend ein Unterschreiten der Schwelltemperatur festgestellt, kann die rotierenden elektrische Maschine durch das Steuersignal wieder in ihren normalen Betriebsmodus versetzt werden. So wird ein effizienter, zuverlässiger Betrieb der rotierenden elektrischen Maschine ermöglicht.

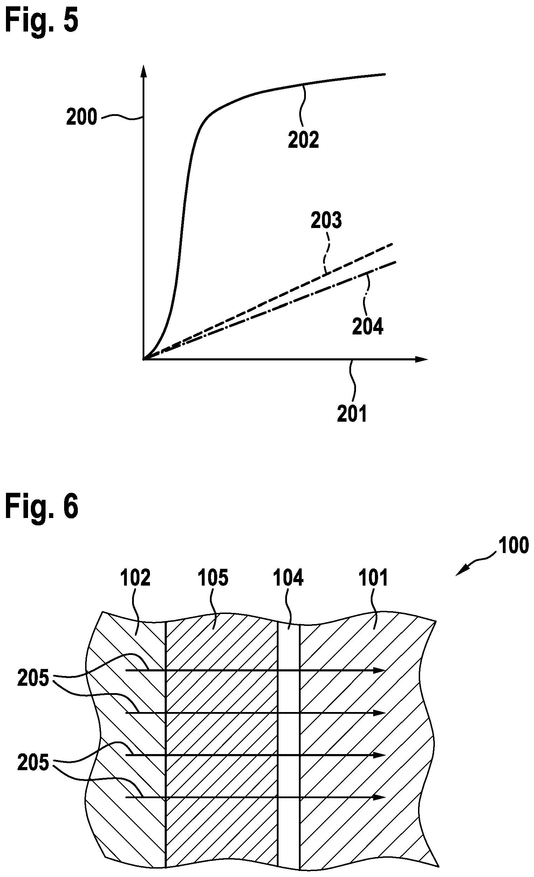

Die B(H)-Kennlinie der funktionalen Schicht kann nicht direkt im Maschinenbetrieb gemessen werden. Aus den beiden B(H)-Kennlinien der beiden Zustände (paramagnetisch und ferromagnetisch), welche beispielsweise am reinen Material außerhalb charakterisiertwerden können, kann in einer Ausführungsform über Berechnung des magnetischen Gesamtkreises in der rotierenden elektrischen Maschine ein Unterschied im zu erwartenden Maschinensignal errechnet werden. Dieses Signal bei Überschreiten der Curietemperatur kann aber alternativ oder ergänzend auch für verschiedene Betriebspunkte vor der Verwendung in der rotierenden elektrischen Maschine aufgezeichnet werden, in seiner Charakteristik in der Software hinterlegt werden, und somit als Referenz dienen. Für die Auswertung kommen nur Signale auf Maschinenebene in Frage, wie z.B. Kennlinien (Leistung, Strom, Spannung, etc.) oder Kombinationen aus mehreren Kenngrößen, die ein Gesamtbild ergeben. Die Änderung dieses Gesamtbildes der Kenngrößen bei Überschreiten der Schwelltemperatur muss wie oben beschrieben als Referenz hinterlegt sein. Als Referenzkurve kann insbesondere die elektrische Leistung oder der Spannungs-/Strom-Verlauf der rotierenden elektrischen Maschine unterhalb der Curietemperatur (ferromagnetisch) und/oder oberhalb der Curietemperatur (paramagnetisch) in einer bzgl. der rotierenden elektrischen Maschine internen oder externen Speichereinheit gespeichert sein und von der Vergleichseinheit abgerufen werden. Ein Beispiel für eine solche Referenzkurve ist in Fig. 5 gezeigt. Auf der x-Achse der B-(H)-Kennlinie ist die magnetische Feldstärke H aufgetragen und auf der y-Achse der Magnetisierungsgrad B. Die funktionale Schicht befindet sich im Magnetfeld des Permanentmagneten. Je nachdem, ob die funktionale Schicht im ferro- oder paramagnetischen Zustand ist, weist die funktionale Schicht im Magnetfeld einen anderen Magnetisierungsgrad auf. Durch Vergleich des Magnetisierungsgrads, welcher durch ein Eingangssignal repräsentiert wird und an die Empfangseinheit übermittelt wird, mit der Referenzkurve, kann ermittelt werden, ob die funktionale Schicht im ferro- oder paramagnetischen Zustand ist, d. h., ob die Oberfläche des Permanentmagneten eine Temperatur oberhalb (funktionale Schicht ist paramagnetisch) oder unterhalb der Schwelltemperatur (funktionale Schicht ist ferromagnetisch) aufweist.

Des Weiteren ist der magnetische Widerstand, als welcher die funktionale Schicht im Magnetkreis wirkt, abhängig davon, ob die funktionale Schicht im ferromagnetischen Zustand (entspricht einem geringen magnetischen Widerstand) oder im paramagnetischen Zustand (entspricht einem geringen magnetischen Widerstand im Vergleich zum magnetischen Widerstand im ferromagnetischen Zustand) ist. Eine Änderung des magnetischen Widerstands lässt sich beispielsweise als Änderung in der magnetischen Flussdichte erfassen, wobei ein die magnetische Flussdichte repräsentierendes Eingangssignal beispielsweise eine elektrische Spannung, Hallspannung, etc. sein kann. Der magnetische Fluss kann beispielsweise mittels Magnetometern, Hallsensoren oder Messspulen gemessen werden. Damit kann über die Betriebsdaten der Maschine ermittelt werden, ob die Schwelltemperatur über- und/oder unterschritten wurde.

Als Betriebsparameter der rotierenden elektrischen Maschine dienen beispielsweise die Rotationsgeschwindigkeit der Rotoranordnung, das Moment der Rotoranordnung oder ein Spulenstrom, welcher durch die Kupferwicklungen des Stators der rotierenden elektrischen Maschine fließt und welcher eine Rotation der Rotoranordnung bewirkt.

Die Vorteile einer rotierenden elektrischen Maschine, umfassend die Rotoranordnung, ergeben sich aus den Vorteilen der Rotorblechpaketanordnung und der Rotoranordnung.

Eine rotierende elektrische Maschine, wie etwa ein Elektromotor oder ein Generator, besteht im Allgemeinen aus einem Stator und einer darin rotierbar angeordneten Rotoranordnung. Eine solche Rotoranordnung enthält typischerweise eine Vielzahl von Rotorblechen, die zu einem so genannten Rotorblechpaket zusammengefügt sind, sowie eine Antriebseinheit umfassend eine Antriebswelle. Eine rotierende elektrische Maschine kann als drehstrombetriebener Elektromotor arbeiten oder auch als Generator, der Drehstrom erzeugt. Die rotierende elektrische Maschine hat eine meist außen sitzende Statorwicklung, die ein magnetisches Drehfeld erzeugt und in der eine elektrische Spannung induziert wird. Der Rotor, meist innen sitzend (Polrad), trägt zur Felderzeugung Permanentmagneten.

Erfindungsgemäß umfasst die rotierende elektrische Maschine die oben beschriebene Steuereinheit, wobei die Steuereinheit dazu eingerichtet ist, bei Überschreitung und Unterschreitung der Schwelltemperatur des Permanentmagneten ein Steuersignal zur Einstellung mindestens eines Betriebsparameters der rotierenden elektrischen Maschine bereitzustellen. Die Vorteile ergeben sich aus den oben beschriebenen Vorteilen der Steuereinheit.

Ein Verfahren zur Steuerung der rotierenden elektrischen Maschine umfasst die Schritte:
- Ermitteln eines Überschreitens und/oder Unterschreitens der Schwelltemperatur des Permanentmagneten,
- Anpassen mindestens eines Betriebsparameters der rotierenden elektrischen Maschine bei Überschreiten und/oder Unterschreiten der Schwelltemperatur des Permanentmagneten.

So wird vorteilhafterweise ein effizienter, zuverlässiger Betrieb der rotierenden elektrischen Maschine ermöglicht.

### Kurze Beschreibung der Zeichnungen

Ausführungsbeispiele der Erfindung sowie nicht zur Erfindung gehörende Ausführungsformen ("Formen" im Folgenden) sind in den Zeichnungen dargestellt und werden in der nachfolgenden Beschreibung näher erläutert. Gleiche Bezugszeichen in den Figuren bezeichnen gleiche oder gleichwirkende Elemente.

Es zeigen
Fig. 1 einen Ausschnitt eines Querschnitts einer Rotoranordnung, umfassend eine Rotorblechpaketanordnung,
Fig. 2 einen Ausschnitt eines Querschnitts einer rotierenden elektrischen Maschine,
Fig. 3a einen Querschnitt eines Permanentmagneten mit einer ersten funktionalen Schicht und einer zweiten funktionalen Schicht,
Fig. 3b einen Querschnitt eines Permanentmagneten mit einer Partikelschicht, umfassend funktionale Partikel und ein Bindematerial,
Fig. 3c einen Querschnitt eines Permanentmagneten, umfassend eine funktionale Schicht, die eine erste Teilschicht und eine zweite Teilschicht umfasst,
Fig. 4 einen Querschnitt eines Permanentmagneten, umfassend eine Schutzschicht, die auf einer vom Permanentmagnet abgewandten Seite der funktionalen Schicht aufgebracht ist,
Fig. 5 eine beispielhafte B-(H)-Kennlinie der funktionalen Schicht,
Fig. 6 ein Skizze eines Verlaufs des Magnetfelds des Permanentmagneten in einem Ausschnitt der Rotorblechpaketanordnung und
Fig. 7 ein Ablaufdiagramm eines Verfahrens zur Steuerung einer rotierenden elektrischen Maschine.

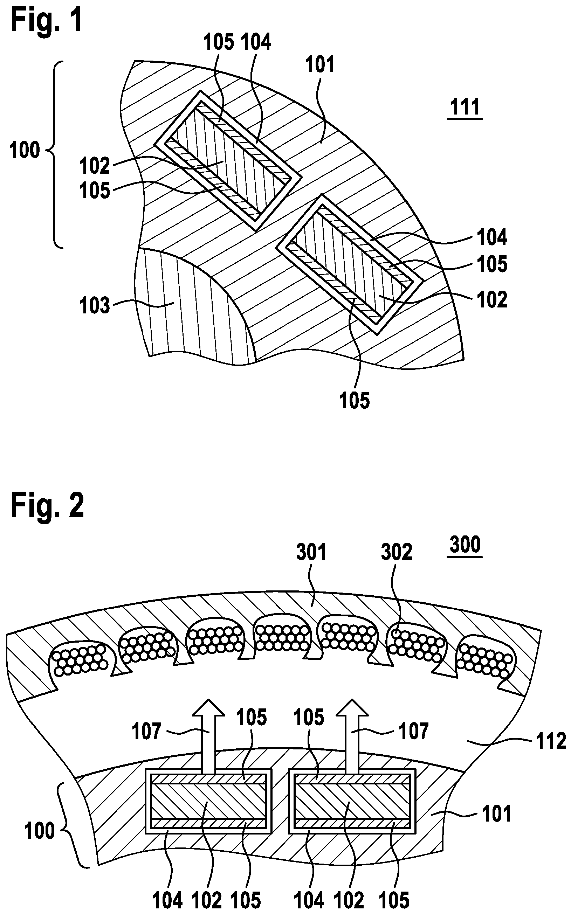

Ausführungsbeispiele der Erfindung sowie Formen Fig. 1 zeigt einen Ausschnitt eines beispielhaften, schematischen Querschnitts einer Rotoranordnung 111, umfassend eine Rotorblechpaketanordnung 100. Die Rotorblechpaketanordnung 100 umfasst ein Rotorblechpaket 101 und in dieser Form mehrere Permanentmagnete 102, welche in dem Rotorblechpaket 101 angeordnet sind. Es handelt sich um sogenannte vergrabene Permanentmagnete 102. Die Rotorblechpaketanordnung 100 ist auf einer Antriebswelle 103 angeordnet. Auf einer der Antriebswelle zugewandten Oberfläche der Permanentmagnete 102 und auf einer der Antriebswelle abgewandten Oberfläche der Permanentmagnete 102 ist jeweils eine funktionale Schicht 105 zur Erfassung einer Überschreitung und/oder einer Unterschreitung einer Schwelltemperatur des Permanentmagneten 102 angeordnet, wobei die funktionale Schicht 105 bei Überschreitung und Unterschreitung der Schwelltemperatur ihre magnetischen Eigenschaften ändert, wodurch die Überschreitung und/oder die Unterschreitung der Schwelltemperatur des Permanentmagneten 102 erfassbar ist. Insbesondere entspricht die Curietemperatur der funktionalen Schicht 105 der Schwelltemperatur. Die Permanentmagnete können beispielsweise quaderförmig als Rechteckmagnet ausgebildet sein, wobei mindestens eine Oberfläche mit der funktionalen Schicht 105 versehen ist. Die Permanentmagnete 102 sitzen bei dieser Form in Taschen 104, die im Schnitt des Rotorblechpakets 101 vorgehalten sind. Die Permanentmagnete 102 werden dort eingeschoben, verklemmt. Des Weiteren können sie zusätzlich oder ergänzend mit einem Klebemittel, beispielsweise Epoxid-Harz, mit dem Rotorblechpaket 101 verklebt werden, sodass die Tasche 104 zwischen dem Rotorblechpaket 101 und dem Permanentmagneten 102 bzw. zwischen dem Rotorblechpaket 101 und der funktionalen Schicht 105 zumindest teilweise mit Epoxid-Harz verfüllt ist.

Alternativ oder ergänzend können die Permanentmagnete auch auf dem Rotorblechpaket 101 angeordnet sein oder in Vertiefungen zumindest teilweise im Rotorblechpaket 101 angeordnet sein.

Fig. 2 zeigt einen Ausschnitt einer rotierenden elektrischen Maschine 300. In dem Ausschnitt ist die Rotorblechpaketanordnung 100 und ein die Rotorblechpaketanordnung 100 umgebender Stator 301 mit Kupferwicklungen 302 abgebildet, wobei der Stator 301 durch einen Spalt 112, insbesondere einen Luftspalt von der Rotorblechpaketanordnung 100 beabstandet ist.

Das Magnetfeld der Permanentmagnete 102, dessen Richtung 107 durch die Pfeile in Fig. 2 angedeutet ist, wird über das Rotorblechpaket 101 in den Spalt 112 gebracht und weiter in das Statorblechpaket 301 geleitet bzw. wechselwirkt mit einem von der Zahnwicklung 302 des Stators erzeugten elektromagnetischen Feld über den Spalt 112 hinweg. Daher ist für die Leitung des Magnetfeldes des Permanentmagneten 102 in Richtung Luftspalt von Interesse, einen möglichst geringen magnetischen Widerstand zu erzeugen, d.h. im Allgemeinen, aber insbesondere für die funktionale Schicht 105 Materialien mit hoher Magnetisierung M oder Polarisation J, hoher Permeabilität µ und hohem elektrischen Widerstand (zur Reduktion der dynamischen Verluste) zu verwenden. Typischerweise sind die Magnete mit einer Passivierungs-Schicht (Zn-Schicht, Phosphat-Schicht, wenige Mikrometer dick) und/oder einer OxidationsschutzSchicht (Cu-Ni, Einfach- oder Multilayer, < 10 Mikrometer) versehen (in Fig. 2 nicht dargestellt). Als Material für das Rotorblechpaket kommt typischerweise ein sehr gut flussleitendes Fe-Si-Material als Elektroblech zum Einsatz. Ein nicht zu vermeidender minimaler Spalt (Luftspalt, bzw. Epoxid-Harz) ist durch die Passung des Permanentmagneten 102 in die Tasche 104 im Rotorblechpaket 101 gegeben.

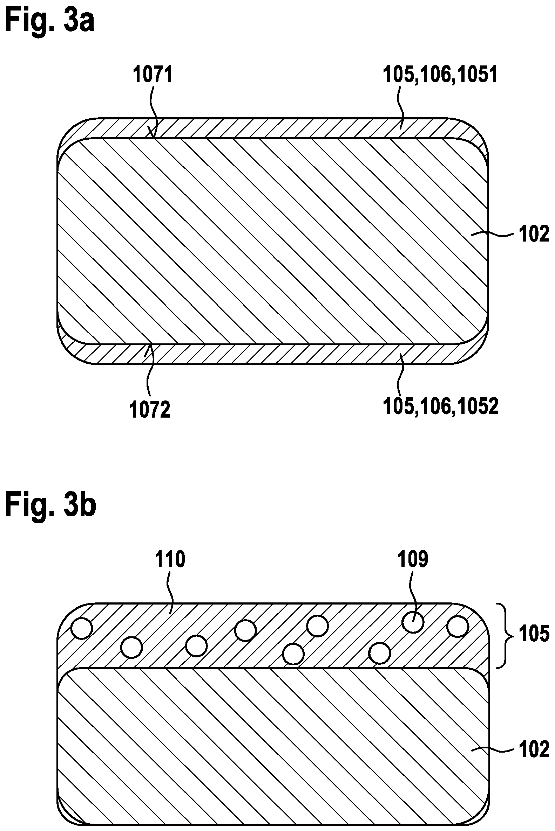

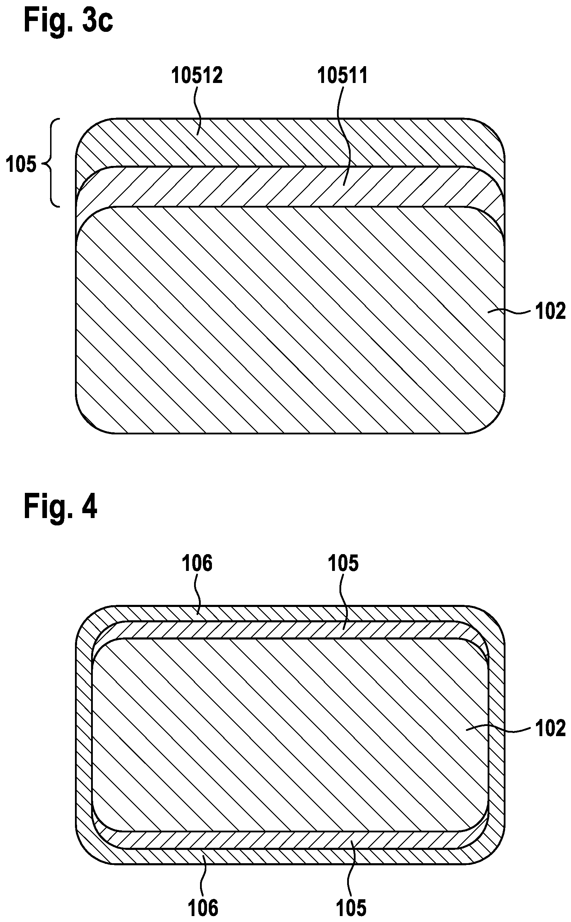

Die funktionale Schicht 105 wird wie in Fig. 3a gezeigt auf die Oberfläche des Permanentmagneten 102 aufgebracht. Wenn die funktionale Schicht 105 selber als Oxidationsschutz 106 fungiert, genügt es lediglich die funktionale Schicht 105 aufzubringen. Eine Kombination mit einer Oxidationsschutzschicht 106 ist möglich und in Fig. 4 schematisch dargestellt. Dabei kann sowohl erst die Oxidationsschutzschicht (nicht dargestellt), als auch zuerst die funktionale Schicht aufgebracht werden (siehe Fig. 4), je nachdem was aus prozesstechnischer Sicht vorteilhafter ist.

Die funktionale Schicht 105 besteht aus Material, welches sich bei den gewünschten Betriebstemperaturen der rotierenden elektrischen Maschine im ferromagnetischen Zustand befindet und eine Curietemperatur T_{c} aufweist, die der gewünschten Schwelltemperatur entspricht. Damit das Material den magnetischen Fluss des Permanentmagneten 102 möglichst gut weiterleitet (d.h. den magnetischen Widerstand im Magnetkreis reduziert), ist es weiterhin vorteilhaft für das Material der funktionalen Schicht, eine hohe Magnetisierung M, Polarisation J und eine hohe Permeabilität µ zu besitzen.

In den Fig. 1, 2, 3a und 4 ist die funktionale Schicht 105 lediglich auf der Ober- und Unterseite des Permanentmagneten 102 aufgebracht. Es ist eine erste funktionale Schicht 1051 auf einer ersten Oberfläche 1071 des Permanentmagneten 102 angeordnet und eine zweite funktionale Schicht 1052 auf einer zweiten Oberfläche 1072 angeordnet. Die erste Oberfläche 1071 und die zweite Oberfläche sind hierbei einander gegenüberliegende Oberflächen des Permanentmagneten. Wie aus Fig. 2 ersichtlich sind dies die relevanten Flächen für den magnetischen Fluss in Richtung des Spaltes 112 zwischen Rotorblechpaketanordnung 100 und Stator 301. Die Richtung entspricht auch der magnetischen Vorzugsrichtung 107 der typischerweise verwendeten anisotropen Permanentmagnete 102. Bei einer kompletten Beschichtung der Oberfläche kann es unter Umständen passieren, dass ein Teil des in Richtung des Luftspaltes 112 austretenden magnetischen Flusses über die Schicht rückschließt und damit das nutzbare Feld verringert. Eine Beschichtung von nur der Ober- und Unterseite 1071, 1072 verhindert dies und kann aus prozesstechnischen Gründen auch wesentlich einfacher und kostengünstiger umgesetzt werden.

In Fig. 3b ist eine Form der funktionalen Schicht 105 im Querschnitt gezeigt, bei der die funktionale Schicht 105 als Partikelschicht ausgebildet ist, welche funktionale Partikel 109, welche in ein Bindematerial 110 eingebettet sind. In einer Ausführungsform ist alternativ oder ergänzend eine solche Partikelschicht, umfassend funktionale Partikel 109 und das Bindematerial 110 oder eine andere funktionale Schicht 105, auf der Unterseite, d. h. auf einer der in Fig. 3b gezeigten funktionalen Schicht 105 gegenüberliegenden Oberfläche des Permanentmagneten 102 angeordnet sein.

Fig. 3c zeigt ein Ausführungsbeispiel der funktionalen Schicht 105 im Querschnitt, wobei die funktionale Schicht 105 mehrere Teilschichten 10511, 10512 (Multilayer-System) umfasst. Die erste Teilschicht (10511) weist eine erste Curietemperatur auf und eine zweite Teilschicht 10512 weist eine zweite Curietemperatur auf. Erfindungsgemäss sind die erste Curietemperatur und die zweite Curietemperatur voneinander abweichend. Somit können mehrere, auch unterschiedliche Schwelltemperaturen des Permanentmagneten erfasst werden, wobei die erste und zweite Curietemperatur den unterschiedlichen Schwelltemperaturen entsprechen. Insbesondere kann somit ermittelt werden in welchem Temperaturintervall sich die Temperatur des Permanentmagneten 102 befindet und damit ggf. Maßnahmen zur Anpassung des Betriebsmodus (z. B. Energiesparmodus) gezielter auf die aktuelle Temperatur abgestimmt werden. So können beispielsweise schon früh Maßnahmen eingeleitet werden, um eine weitere Temperaturerhöhung zu vermeiden und anhand der weiteren Schwelltemperaturen kann ermittelt werden, ob die Maßnahmen gegriffen haben, d. h. die Temperatur sinkt oder gehalten wird, oder ob die Temperatur weiter steigt und somit stärkere Maßnahmen durch Anpassung der Betriebsparameter eingeleitet werden müssen.

In Fig. 5 sind beispielhaft und schematisch die Magnetisierungs-Kennlinien (Magnetische Induktion 200 über einem externen Magnetfeld 201) für ein ferromagnetisches Material 202, ein paramagnetisches Material 203 und für das Vakuum 204 dargestellt. Das ferromagnetische Material besitzt eine magnetische Permeabilität µ_{f}, die typischerweise um mehrere Größenordnungen höher ist als die eines paramagnetischen Materials µₚ. Daher stellt ein paramagnetisches Material in einem Magnetkreis einen vergleichbaren magnetischen Widerstand dar wie ein Luftspalt. Dementsprechend wird der Magnetkreis durch den Übergang des magnetisch gut leitenden ferromagnetischen Zustands der funktionalen Schicht 105 in den magnetisch schlecht leitenden paramagnetischen Zustand signifikant beeinflusst. Diese sprunghafte Änderung des magnetischen Flusses lässt sich in den Maschinendaten im Betrieb verlässlich detektieren. Die Schichtdicke der funktionalen Schicht sollte nicht zu dick gewählt werden, sodass im Normalbetrieb (Temperatur < T_{c} der funktionalen Schicht) diese das Magnetfeld des Permanentmagneten 102 nicht zu sehr abschirmt und dadurch die Funktion der rotierenden elektrischen Maschine negativ beeinflusst. Die Schichtdicke bewegt sich vorzugsweise im Bereich <50 µm, weiterhin vorteilhaft im Bereich <20 µm.

Fig. 6 zeigt einen skizzierten Verlauf der Magnetfeldlinien 205 des Permanentmagneten 102 in der Rotorblechpaketanordnung 100. Die Feldlinien verlaufen vom Permanentmagneten 102 durch die funktionale Schicht 105 und den Zwischenraum (Tasche) 104 zwischen funktionaler Schicht und Rotorblechpaket 101 und durch das Rotorblechpaket.

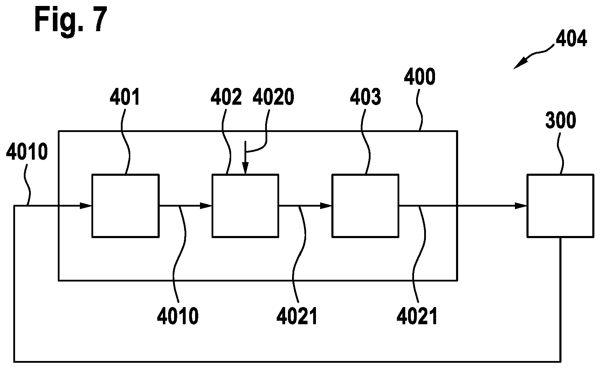

Fig. 7 zeigt ein Ablaufdiagramm eines Verfahrens 404 zur Steuerung der rotierenden elektrischen Maschine 300. Eine Steuereinheit 400, beispielsweise eine Motorsteuerung, empfängt mittels einer Empfangseinheit 401 ein Eingangssignal 4010 von der rotierenden elektrischen Maschine 300. Das Eingangssignal 4010 repräsentiert eine magnetische Größe, mittels derer die Überschreitung und/oder Unterschreitung der Schwelltemperatur des Permanentmagneten 102 erfassbar ist. Das Eingangssignal 4010 kann ein Sensorsignal sein, welches die magnetische Größe, beispielsweise den magnetischen Fluss des Permanentmagneten, repräsentiert. Der Sensor kann beispielsweise ein Magnetometer, ein Hall-Sensor, etc. sein. Von der Empfangseinheit 401 wird das Eingangssignal 4010 an die Vergleichseinheit 402 weitergeleitet, wo es mit einer Referenzkurve 4020 verglichen wird. In Abhängigkeit der erfassten Überschreitung und Unterschreitung der Schwelltemperatur des Permanentmagneten 102 ein Steuersignal 4021 zur Einstellung mindestens eines Betriebsparameters der rotierenden elektrischen Maschine 300 von der Vergleichseinheit 402 bereitgestellt.

Ergibt sich bei dem Vergleich, dass sich die funktionale Schicht 105 im ferromagnetischen Zustand befindet und arbeitet die rotierende elektrische Maschine 300 im Normalbetrieb, so erfolgt keine Anpassung der Betriebsparameter mittels des Steuersignals 4021.

Ergibt sich bei dem Vergleich, dass sich die funktionale Schicht 105 im ferromagnetischen Zustand befindet und arbeitet die rotierende elektrische Maschine 300 in einem Sonderbetrieb (z. B. Energiesparmodus oder Abschalten), so kann mittels des Steuersignals 4021 die rotierende elektrische Maschine 300 wieder in den Normalbetrieb versetzt werden, da aus dem ferromagnetischen Zustand der funktionalen Schicht 105 gefolgert werden kann, dass der Permanentmagnet 102 eine Temperatur unterhalb der Curietemperatur der funktionalen Schicht 105 und somit unterhalb der Schwelltemperatur des Permanentmagneten 102 aufweist und daher nicht Gefahr läuft zu Überhitzen. Ein Normalbetrieb ist daher möglich.

Ergibt sich bei dem Vergleich, dass sich die funktionale Schicht 105 im paramagnetischen Zustand befindet und arbeitet die rotierende elektrische Maschine 300 im Normalbetrieb so kann mittels des Steuersignals 4021 die rotierende elektrische Maschine 300 in einen Sonderbetrieb (z. B. Energiesparmodus, angepasste Betriebsparameter oder Abschalten der rotierenden elektrischen Maschine 300) versetzt werden.

Ergibt sich bei dem Vergleich, dass sich die funktionale Schicht 105 im paramagnetischen Zustand befindet und arbeitet die rotierende elektrische Maschine 300 im Sonderbetrieb (z. B. Energiesparmodus) so können mittels des Steuersignals 4021 weitere Maßnahmen zur Temperatursenkungen, wie beispielsweise ein Abschalten der rotierenden elektrischen Maschine 300 oder ein weiteres Anpassen der Betriebsparameter eingeleitet werden. Als Betriebsparameter der rotierenden elektrischen Maschine dienen beispielsweise die Rotationsgeschwindigkeit der Rotoranordnung, das Moment der Rotoranordnung oder ein Spulenstrom, welcher durch die Kupferwicklungen des Stators der rotierenden elektrischen Maschine fließt und welcher eine Rotation der Rotoranordnung bewirkt. Beispielsweise kann der Spulenstrom verringert werden und somit die Joulsche Wärme, welche ebenfalls zu einem Aufheizen der Permanentmagnete führt, reduziert werden.

Eine Ausgabeeinheit 403 gibt das Steuersignal 4021 zur Einstellung mindestens eines Betriebsparameters der rotierenden elektrischen Maschine 300 in Abhängigkeit der erfassten Überschreitung und/oder Unterschreitung der Schwelltemperatur des Permanentmagneten 102 an die rotierende elektrische Maschine 300 aus.

## Patentansprüche

1. Rotorblechpaketanordnung (100), umfassend mindestens einen Permanentmagnet (102), der
eine funktionale Schicht (105, 1051, 1052) zur Erfassung einer Überschreitung und einer Unterschreitung einer Schwellentemperatur des Permanentmagneten (102) aufweist, wobei die funktionale Schicht (105, 1051, 1052) bei Überschreitung und Unterschreitung der Schwellentemperatur ihre magnetischen Eigenschaften ändert, wodurch die Überschreitung und die Unterschreitung der Schwellentemperatur des Permanentmagneten (102) erfassbar ist, wobei die Schwellentemperatur eine Temperatur kleiner als die Curietemperatur des Permanentmagneten (102) ist, bei der noch keine irreversiblen Änderungen der magnetischen Eigenschaften des Permanentmagneten (102) auftreten,
**gekennzeichnet durch**
ein Rotorblechpaket (101), an oder in dem der mindestens eine Permanentmagnet (102) angeordnet ist, wobei die funktionale Schicht (105, 1051, 1052) eine erste Teilschicht (10511), die eine erste Curietemperatur aufweist und eine zweite Teilschicht (10512), die eine zweite Curietemperatur aufweist, umfasst und wobei die erste Curietemperatur und die zweite Curietemperatur voneinander abweichen.

2. Rotorblechpaketanordnung (100) nach Anspruch 1, **dadurch gekennzeichnet, dass** der Permanentmagnet (102) eine Schutzschicht (106) umfasst, wobei die Schutzschicht (106) zwischen Permanentmagnet (102) und funktionaler Schicht (105, 1051, 1052) oder auf einer vom Permanentmagnet (102) abgewandten Seite der funktionalen Schicht (105, 1051, 1052) aufgebracht ist.

3. Rotorblechpaketanordnung (100) nach einem der vorhergehenden Ansprüche, **dadurch gekennzeichnet, dass** das Rotorblechpaket (101) eine erste und eine zweite funktionale Schicht (105, 1051, 1052) umfasst, wobei die erste funktionale Schicht (1051) auf einer ersten Oberfläche (1071) des Permanentmagneten (102) angeordnet ist und wobei die zweite funktionale Schicht (1051) auf einer von der ersten Oberfläche (1071) abgewandten zweiten Oberfläche (1072) des Permanentmagneten (102) angeordnet ist.

4. Rotorblechpaketanordnung (100) nach einem der vorhergehenden Ansprüche, **dadurch gekennzeichnet, dass** die funktionale Schicht (105, 1051, 1052) als Partikelschicht ausgebildet ist, welche funktionale Partikel (109) und ein Bindematerial (110) umfasst, wobei die funktionalen Partikel (109) von dem Bindematerial (110) zumindest teilweise umhüllt sind.

5. Rotorblechpaketanordnung (100) nach einem der vorhergehenden Ansprüche, **dadurch gekennzeichnet, dass** der Permanentmagnet (102) aus einer Neodym-Eisen-Bor-Legierung ausgebildet ist und die Curietemperatur der funktionalen Schicht einen Wert kleiner gleich 250° Celsius, insbesondere einen Wert zwischen 100° Celsius und 200° Celsius, aufweist.

6. Rotorblechpaketanordnung (100) nach einem der Ansprüche 1 bis 4, **dadurch gekennzeichnet, dass** der Permanentmagnet (102) aus einer Samarium-Cobalt-Legierung ausgebildet ist und die Curietemperatur der funktionalen Schicht einen Wert von kleiner gleich 500° Celsius oder insbesondere einen Wert zwischen 250° Celsius und 350° Celsius aufweist.

7. Rotorblechpaketanordnung (100) nach einem der vorhergehenden Ansprüche, **dadurch gekennzeichnet, dass** der Permanentmagnet (102) mit der funktionalen Schicht (105, 1051, 1052) in einer Tasche im Rotorblechpaket (101) angeordnet ist.

8. Rotoranordnung (108), umfassend eine Rotorblechpaketanordnung (100) nach einem der vorhergehenden Ansprüche.

9. Rotierende elektrische Maschine (300), umfassend eine Rotoranordnung (108) nach Anspruch 8.

10. Rotierende elektrische Maschine (300) nach Anspruch 9, umfassend eine Steuereinheit (400) zur Steuerung der rotierenden elektrischen Maschine (300), umfassend
• eine Empfangseinheit (401), welche dazu eingerichtet ist ein Eingangssignal (4010) zu empfangen, wobei das Eingangssignal (4010) eine magnetische Größe repräsentiert, mittels derer die Überschreitung und Unterschreitung der Schwellentemperatur des Permanentmagneten (102) erfassbar ist,
• eine Vergleichseinheit (402), welche ausgebildet ist, das Eingangssignal (4010) mit einer Referenzkurve (4020) zu vergleichen und in Abhängigkeit der erfassten Überschreitung und Unterschreitung der Schwellentemperatur des Permanentmagneten (102) ein Steuersignal (4021) zur Einstellung mindestens eines Betriebsparameters der rotierenden elektrischen Maschine (300) bereitzustellen und
• eine Ausgabeeinheit (403) zur Ausgabe des Steuersignals (4021) zur Einstellung mindestens eines Betriebsparameters der rotierenden elektrischen Maschine (300) in Abhängigkeit der erfassten Überschreitung und Unterschreitung der Schwellentemperatur des Permanentmagneten (102).

11. Verfahren (404) zur Steuerung einer rotierenden elektrischen Maschine (300) nach Anspruch 10, umfassend die Schritte:
• Ermitteln eines Überschreitens und Unterschreitens der Schwellentemperatur des Permanentmagneten (102),
• Anpassen mindestens eines Betriebsparameters der rotierenden elektrischen Maschine (300) bei Überschreiten und Unterschreiten der Schwellentemperatur des Permanentmagneten (102).

## Claims

1. Rotor laminated core arrangement (100) comprising at least one permanent magnet (102) which
has a functional layer (105, 1051, 1052) for detecting an exceedance and an undershoot of a threshold temperature of the permanent magnet (102), wherein the functional layer (105, 1051, 1052) changes its magnetic properties when the threshold temperature is exceeded and undershot, as a result of which the exceedance and the undershoot of the threshold temperature of the permanent magnet (102) can be detected, wherein the threshold temperature is a temperature lower than the Curie temperature of the permanent magnet (102), at which no irreversible changes of the magnetic properties of the permanent magnet (102) occur, **characterized by** a rotor laminated core (101) on or in which the at least one permanent magnet (102) is arranged, wherein the functional layer (105, 1051, 1052) comprises a first sublayer (10511) which has a first Curie temperature and a second sublayer (10512) which has a second Curie temperature, and wherein the first Curie temperature and the second Curie temperature differ from one another.

2. Rotor laminated core arrangement (100) according to Claim 1, **characterized in that** the permanent magnet (102) comprises a protective layer (106), wherein the protective layer (106) is applied between the permanent magnet (102) and the functional layer (105, 1051, 1052) or to a side of the functional layer (105, 1051, 1052) facing away from the permanent magnet (102).

3. Rotor laminated core arrangement (100) according to either of the preceding claims, **characterized in that** the rotor laminated core (101) comprises a first and a second functional layer (105, 1051, 1052), wherein the first functional layer (1051) is arranged on a first surface (1071) of the permanent magnet (102) and wherein the second functional layer (1051) is arranged on a second surface (1072) of the permanent magnet (102) facing away from the first surface (1071).

4. Rotor laminated core arrangement (100) according to one of the preceding claims, **characterized in that** the functional layer (105, 1051, 1052) is formed as a particle layer which comprises functional particles (109) and a binder material (110), wherein the functional particles (109) are at least partially enveloped by the binder material (110).

5. Rotor laminated core arrangement (100) according to one of the preceding claims, **characterized in that** the permanent magnet (102) is formed from a neodymium-iron-boron alloy and the Curie temperature of the functional layer has a value less than or equal to 250° Celsius, in particular a value between 100° Celsius and 200° Celsius.

6. Rotor laminated core arrangement (100) according to one of Claims 1 to 4, **characterized in that** the permanent magnet (102) is formed from a samarium-cobalt alloy and the Curie temperature of the functional layer has a value less than or equal to 500° Celsius or in particular a value between 250° Celsius and 350° Celsius.

7. Rotor laminated core arrangement (100) according to one of the preceding claims, **characterized in that** the permanent magnet (102) with the functional layer (105, 1051, 1052) is arranged in a pocket in the rotor laminated core (101).

8. Rotor arrangement (108) comprising a rotor laminated core arrangement (100) according to one of the preceding claims.

9. Rotating electric machine (300) comprising a rotor arrangement (108) according to Claim 8.

10. Rotating electric machine (300) according to Claim 9, comprising a control unit (400) for controlling the rotating electric machine (300), comprising
• a receiving unit (401) which is configured to receive an input signal (4010), wherein the input signal (4010) represents a magnetic value which can be used to detect the exceedance and undershoot of the threshold temperature of the permanent magnet (102),
• a comparison unit (402) which is designed to compare the input signal (4010) with a reference curve (4020) and, in dependence on the detected exceedance and undershoot of the threshold temperature of the permanent magnet (102), to provide a control signal (4021) for setting at least one operating parameter of the rotating electric machine (300), and
• an output unit (403) for outputting the control signal (4021) for setting at least one operating parameter of the rotating electric machine (300) in dependence on the detected exceedance and undershoot of the threshold temperature of the permanent magnet (102).

11. Method (404) for controlling a rotating electric machine (300) according to Claim 10, comprising the steps of:
• ascertaining an exceedance and undershoot of the threshold temperature of the permanent magnet (102),
• adapting at least one operating parameter of the rotating electric machine (300) upon exceedance and undershoot of the threshold temperature of the permanent magnet (102).

## Revendications

1. Assemblage (100) de paquet de tôles de rotor comprenant au moins un aimant permanent (102), qui
possède une couche fonctionnelle (105, 1051, 1052) destinée à détecter un dépassement vers le haut et un dépassement vers le bas d'une température seuil de l'aimant permanent (102), la couche fonctionnelle (105, 1051, 1052) modifiant ses propriétés magnétiques lors du dépassement vers le haut et du dépassement vers le bas de la température seuil, moyennant quoi le dépassement vers le haut et le dépassement vers le bas de la température seuil de l'aimant permanent (102) peuvent être détectés, la température seuil étant une température inférieure à la température de Curie de l'aimant permanent (102) à laquelle aucune modification irréversible des propriétés magnétiques de l'aimant permanent (102) ne se produit encore, **caractérisé par** un paquet de tôles (101) de rotor sur ou dans lequel est disposé l'au moins un aimant permanent (102), la couche fonctionnelle (105, 1051, 1052) possédant une première couche partielle (10511) qui présente une première température de Curie et une deuxième couche partielle (10512) qui présente une deuxième température de Curie, et la première température de Curie et la deuxième température de Curie étant différentes l'une de l'autre.

2. Assemblage (100) de paquet de tôles de rotor selon la revendication 1, **caractérisé en ce que** l'aimant permanent (102) comporte une couche protectrice (106), la couche protectrice (106) étant appliquée entre l'aimant permanent (102) et la couche fonctionnelle (105, 1051, 1052) ou sur un côté de la couche fonctionnelle (105, 1051, 1052) à l'opposé de l'aimant permanent (102).

3. Assemblage (100) de paquet de tôles de rotor selon l'une des revendications précédentes, **caractérisé en ce que** le paquet de tôles (101) de rotor comprend une première et une deuxième couche fonctionnelle (105, 1051, 1052), la première couche fonctionnelle (1051) étant disposée sur une première surface (1071) de l'aimant permanent (102) et la deuxième couche fonctionnelle (1051) étant disposée sur une deuxième surface (1072) de l'aimant permanent (102) à l'opposé de la première surface (1071).

4. Assemblage (100) de paquet de tôles de rotor selon l'une des revendications précédentes, **caractérisé en ce que** la couche fonctionnelle (105, 1051, 1052) est réalisée sous forme de couche de particules qui comprend des particules fonctionnelles (109) et un matériau liant (110), les particules fonctionnelles (109) étant au moins partiellement enrobées par le matériau liant (110).

5. Assemblage (100) de paquet de tôles de rotor selon l'une des revendications précédentes, **caractérisé en ce que** l'aimant permanent (102) est constitué d'un alliage de néodyme-fer-bore et la température de Curie de la couche fonctionnelle présente une valeur inférieure ou égale à 250 °Celsius, en particulier une valeur comprise entre 100 °Celsius et 200 °Celsius.

6. Assemblage (100) de paquet de tôles de rotor selon l'une des revendications 1 à 4, **caractérisé en ce que** l'aimant permanent (102) est constitué d'un alliage de samarium-cobalt et la température de Curie de la couche fonctionnelle présente une valeur inférieure ou égale à 500 °Celsius ou notamment une valeur comprise entre 250 °Celsius et 350 °Celsius.

7. Assemblage (100) de paquet de tôles de rotor selon l'une des revendications précédentes, **caractérisé en ce que** l'aimant permanent (102) avec la couche fonctionnelle (105, 1051, 1052) est disposé dans une poche dans le paquet de tôles (101) de rotor.

8. Assemblage de rotor (108) comprenant un assemblage (100) de paquet de tôles de rotor selon l'une des revendications précédentes.

9. Machine électrique rotative (300) comprenant un assemblage de rotor (108) selon la revendication 8.

10. Machine électrique rotative (300) selon la revendication 9, comprenant une unité de commande (400) destinée à commander la machine électrique rotative (300), comprenant
• une unité de réception (401), laquelle est conçue pour recevoir un signal d'entrée (4010), le signal d'entrée (4010) représentant une grandeur magnétique à l'aide de laquelle peut être détecté le dépassement vers le haut et le dépassement vers le bas de la température seuil de l'aimant permanent (102),
• une unité de comparaison (402), laquelle est configurée pour comparer le signal d'entrée (4010) à une courbe de référence (4020) et, en fonction du dépassement vers le haut et du dépassement vers le bas détectés de la température seuil de l'aimant permanent (102), fournir un signal de commande (4021) servant à régler au moins un paramètre de fonctionnement de la machine électrique rotative (300) et
• une unité de sortie (403) destinée à émettre le signal de commande (4021) servant à régler au moins un paramètre de fonctionnement de la machine électrique rotative (300) en fonction du dépassement vers le haut et du dépassement vers le bas détectés de la température seuil de l'aimant permanent (102).

11. Procédé (404) de commande d'une machine électrique rotative (300) selon la revendication 10, comprenant les étapes suivantes :
• détermination d'un dépassement vers le haut et d'un dépassement vers le bas de la température seuil de l'aimant permanent (102),
• adaptation d'au moins un paramètre de fonctionnement de la machine électrique rotative (300) en cas de dépassement vers le haut et de dépassement vers le bas de la température seuil de l'aimant permanent (102).
